# EUROPÄISCHE PATENTANMELDUNG

(11) **EP 2 292 333 A2**
(43) Veröffentlichungstag der Anmeldung: **09.03.2011**
(21) Anmeldenummer: 10012782.8
(22) Anmeldetag: 19.04.2004
(51) Int. Cl.: B02C 18/18, B30B 9/32

(54) **Vorrichtung zum Zusammendrücken leerer Behälter**

(30) Priorität: 27.04.2003 DE 10320509; 26.05.2003 DE 10325368; 13.11.2003 DE 10353188
(62) Teilanmeldung aus: 04728172.0
(71) Anmelder: Schwelling, Hermann, 88682 Salem (DE)
(72) Erfinder: Schwelling, Hermann, 88682 Salem (DE)
(74) Vertreter: Fürst, Siegfried

(57) **Zusammenfassung**

Die Erfindung betrifft eine Vorrichtung zum Zusammendrücken leerer Behälter, insbesondere Getränkeflaschen oder -dosen aus Kunststoff, insbesondere aus PET, oder Weißblech, in deren Gehäuse vor der Einheit zur Volumenreduzierung der zugeführten Behälter ein spezieller Separator/Selektierer vorgesehen ist.

## Beschreibung

Die Erfindung betrifft eine Vorrichtung nebst einem Verfahren zum Zusammendrücken leerer Behälter, insbesondere Getränkeflaschen oder -dosen u.ä. Abfallmateriallen, nach dem Oberbegriff des Patentanspruches 1.
Derartige Vorrichtungen werden verwendet, um leere Behälter, insbesondere solche aus dem Lebensmittelbereich, wie Getränkeflaschen, Dosen u.ä. Behältnisse, zu kompaktieren, für den Transport zu den Recyclinganlagen hin bzw. für den Recyclingprozess selbst.

Bekannt sind zum einen Vorrichtungen die nach dem Prinzip der Plattenpressung arbeiten und zum anderen solche, deren Preeseinheit/-en Walzen enthalten. Diese Vorrichtungen sind entweder für die Aufbereitung von Kunststoffbehältern oder von Weißblech-Behältern/-dosen optimiert.
Da besagtes Abfallgut in nicht unbedeutender Anzahl auch verschlossene Behälter enthalten kann, ist der/den Presseinrichtung/-en dieser Vorrichtungen oft ein Perforator vorangestellt, z.B. ein Perforator nach der DE 43 38 561 A1 oder der US 5,642,661 A.

Damit der technische Aufwand bei diesen Vorrichtungen verringert werden kann, sind auch Vorrichtungen bekannt, bei denen an Presstellen der/den Presseinrichtung/-en Mittel zum Perforieren vorgesehen sind, z.B. bei einer Vorrichtung zum Kompaktieren von leeren Getränkebehältern nach der DE 100 55 201 A1. Diese Vorrichtung besitzt eine sich im Wesentlichen trichterförmig verjüngende Förderstrecke, in welche die Getränkebehälter einlaufen und unter der Wirkung von die Förderstrecke seitlich begrenzenden Einrichtungen zum Fördern und Zusammenpressen sukzessiv kompaktiert werden.
Zudem ist dort vorgesehen, dass die Walzen mit auf Ihrem Umfang verteilten, schneidenförmigen Erhöhungen, die sich über die Länge der Walzen, also parallel zur deren Rotationsachse, erstrecken, ausgestattet sind. Weiterhin und insbesondere bestehen die Einrichtungen zum Fördern und Zusammenpressen der Getränkebehälter bei dieser Vorrichtung aus mit Trommelmotoren angetriebenen Walzen.
Diese Vorrichtung ist vor allem wegen den letztgenannten Baugruppen teuer und wartungsintensiv.
Ein weiterer Nachteil ist gegeben, wenn der Abstand der paarweise angeordneten Walzen, insbesondere die mit dem geringsten AchsAbstand, bezüglich ihres Abstandes und der Lage der längs gerichteten Schneiden nicht genau justiert ist. Dann erfolgt eine Trennung des hindurch geführten Materials, so dass jeweils aus einer Flasche oder Dose kleinere Stücke entstehen. Solche Klein- und Kleinststücke lassen sich, wenn überhaupt, sehr schlecht zu Ballen weiterverarbeiten; für deren Transport sind dann weitere Behälter notwendig.

Ausgehend von diesem Stand der Technik ist der Fachmann vor die Aufgabe gestellt, eine Vorrichtung zum Zusammendrücken leerer Behälter, insbesondere Getränkeflaschen bzw. Getränkedosen aus Kunststoff, insbesondere PET-Flaschen, oder Weißblech, derart zu gestalten, dass das Zusammendrücken zuverlässig gewährleistet ist sowie die Fertigungskosten und der Wartungsaufwand für diese Vorrichtung gegenüber bekannten Vorrichtungen gemindert werden kann, zudem wird eine Verfahrensverbesserung gesucht.

Erfindungsgemäß wird diese Aufgabe durch eine Vorrichtung zum Zusammendrücken leerer Behältern mit den Merkmalen des Patentanspruchs 1 gelöst; vorteilhafte Weiterbildungen und Ausgestaltungen der Erfindung sind Gegenstand der abhängigen Vorrichtungsansprüche sowie der Verfahrensansprüche.

Der Kerngedanke der Erfindung besteht darin, dass mit der neuen Vorrichtung mit nur einem Walzenpaar besagte Behälter nahezu zeitgleich perforiert und zusammengedrückt werden. Die Mittel zum Perforieren sind derart ausgebildet und an jeder der beiden (Press-) Walzen angeordnet, bevorzugt in selbige Integriert, insbesondere Bestandteil von deren Körper selbst, dass verfahrensmäßig während des abschnittsweisen Durchtrennen des verflachten Materials und/oder unmittelbar folgend, quasi in der Endphase eines solchen Schnittes, eingeschnittene Wandabschnitte der aneinander gepressten Wandabschnitte eines Behälters miteinander verhaken. Hiermit wird dem Expansionsbestreben des Behälters nach dem Pressen, welches von dessen ursprünglicher Körperform, den Elastizitätswerten des Behältermaterials und dem Pressvorgang bestimmt ist, entgegen gewirkt.

Weiterhin sind an wenigstens einer der Walzen der neuen Vorrichtung die Mittel zum Zusammendrücken derart geformt und in deren Lage zu den Mitteln zum Zusammendrücken an der im Wesentlichen parallel gegenüberliegend positionierten Walze angeordnet, dass die Außenfläche des Behälters, in Querrichtung zu dessen Förderrichtung gesehen, zumindest abschnittsweise angeschnitten bzw. wenigstens angeritzt ist. Mithin werden dort vorhandene Spannungen im Material gelöst und somit Expansionsbestrebungen des Behälters nach dem Zusammendrücken ebenfalls entgegen gewirkt.

Zudem wird durch die neue Vorrichtung das Aufbereiten von Behältern aus Kunststoff, insbesondere PET-Material, und von Behältern aus Weißblech in besagter Art und Weise, ohne zusätzliche Einstellungen an der Vorrichtung, unmittelbar nachelnanderfolgend ermöglicht.

Die neue Vorrichtung zum Zusammendrücken leerer Behälter, insbesondere von Getränkeflaschen oder -dosen aus Kunststoff oder Weißblech besteht aus einem eine Einfüllöffnung sowie eine Ausgangsöffnung (Auslassöffnung) aufweisenden Gehäuse und eine im Gehäuse angeordnete Schneid- und Presseinheit. Weiterhin sind Mittel zum Antrieb und zur Steuerung der Schneid- und Presseinheit vorgesehen, wobei die Schneid- und Presseinheit wenigstens zwei, bezüglich ihren Drehachsen mit Abstand zueinander angeordnete Walzen enthält. Jede der beiden Walzen weist mehrere, mit axialem Abstand zueinander angeordnete Scheiben, die Arbeitsscheiben, auf.

Im Speziellen ist an dieser Schneid- und Presseinheit vorgesehen, dass Jede Walze, in Längsrichtung ihrer Drehachse gesehen, wenigstens zwei, bevorzugt mehrere Abschnitte aufweist, wobei wenigstens ein Abschnitt dieser nacheinander Im Wechsel folgenden Abschnitte eine oder mehrere, axial beabstandete, Scheiben besitzt und wobei diese nacheinander folgenden Abschnitte jeweils einen anderen äußeren Durchmesser besitzen, und, im montierten Zustand der beiden Walzen, wenigstens die den größeren äußeren Durchmesser aufweisenden Abschnitte zueinander versetzt und mit ihren Umfangsflächen teilweise kämmend (überlappend) nebeneinander angeordnet sind und somit Schneidscheiben bilden. Bevorzugt ist in wenigstens einer dieser Schneidscheiben wenigstens eine Nut In deren Umfangsfläche vorgesehen, die beide Schneidscheibenflanken durchsetzt.

Bevorzugt ist die Länge der Abschnitte mit dem größeren Durchmesser geringer, als die Länge der Abschnitte, die eine oder mehrere Scheiben mit kleinerem Durchmesser besitzen. Der Durchmesser der größeren Scheiben beträgt vorzugsweise 79 mm, der Durchmesser der längeren Abschnitte - der Pressbereiche - 70 mm und der Kerndurchmesser der Walzen 50 mm.

Eine vorteilhafte Ausführung der Vorrichtung besteht noch darin, dass auch die den kleineren äußeren Durchmesser aufweisenden Abschnitte wenigstens zwei radial nach innen gerichtete, bis zu einem Kerndurchmesser reichende Einstiche besitzen derart, dass wenigsten eine Druckscheibe gebildet ist. Bevorzugt sind jedoch in die den kleineren Durchmesser aufweisenden Abschnitte mehrere Druckscheiben eingearbeitet, die jeweils mit der Breite des Einstiches zueinander beabstandet sind.
Bevorzugt ist In wenigstens einer dieser Druckscheiben wenigstens eine Nut in deren Umfangsfläche vorgesehen; wobei jede vorgesehene Nut beide Flanken der betreffenden Druckscheibe durchsetzt.
Nach einer weiteren Ausführung sind zwischen den Scheiben Abstreifer angeordnet, wobei serienmäßige Abstreifer von Aktenvernichtern Anwendung finden.

Da mit der neuen Vorrichtung zum Zusammendrücken leerer Behälter sowohl Getränkeflaschen bzw. Getränkedosen aus Kunststoff, insbesondere PET-Flaschen, als auch aus Weißblech bestehende Behälter zuverlässig zusammendrückbar sein sollen, sind die zu erfüllenden Anforderungen auch vielfach. Bei den Tätigkeiten zur Problemlösung - den theoretischen Betrachtungen und den praktischen Versuchen - hat sich herausgestellt, dass nicht nur die Gestaltung (Form) und die Anzahl der Schneidscheiben an sich wichtig ist, sondern auch die Bemessung des so genannten Schnittspiels zwischen benachbarten Schneidscheiben und der für die Schneidwalzen verwendete Werkstoff auf die Leistungsparameter einer solchen Vorrichtung einschließlich deren Verfügbarkeit und Wartungsaufwand positiv oder negativ wirken. Eine positive Wirkung wird erreicht, wenn dieses Schnittspiel zwischen benachbarten Scheiben vorzugsweise einen Wert zwischen 0,2 mm und 2 mm hat oder/und die Überlappung benachbarter und gegenüber liegender Scheiben zwischen 0,5 mm und 2,5 mm gewählt Ist, bevorzugt 10 % der Breite einer Scheibe.

Die Walzen der Vorrichtung bestehen, bevorzugt, aus dem Werkstoff 42CrMoS4. Die Scheiben der Walzen sind gehärtet und haben maximal eine Härte von 55 HRc.

Nach einer speziellen Ausführung der in der Umfangsfläche der Schneidscheibe bzw. Schneidscheiben angeordneten Nuten bildet die In Umlaufrichtung nacheilende Flanke mit der Umfangsfläche einen in Umlaufrichtung weisenden spitzwinkligen Haken, wobei die an der Spitze beginnende Nutflanke, zumindest abschnittsweise, einen linearen sowie entgegen dem Walzendrehsinn gerichteten Verlauf hat und der daran anschließende Übergangsbereich zum Nutfuss und/oder der in Umlaufrichtung liegenden Nutflanke hin, bogenförmig ausgebildet ist. Bevorzugt verlaufen die beiden Nutflanken zueinander parallel oder divergierend. Der Spitzenwinkel des Hakens ist vorzugsweise zwischen 45° und 80° gewählt.

In weiterer vorzugsweiser Ausführung rotieren die Walzen mit einer Drehzahl von 60 U/min. Es ist zudem vorgesehen, dass der Startimpuls für die Walzen beispielsweise über eine Lichtschranke erfolgt und eine Nachlaufzeit vorgesehen Ist.

Zudem ist bei der neuen Vorrichtung vorgesehen, dass der Schneid- und Presseinheit im Bereich der Einfüllöffnung, die in einer bevorzugten Ausführung einen Vorratsbehälter mit trichterartiger Gestalt umfasst, ein Separator vorgelagert ist. Um eine Drehachse des Separators rotieren Flügel, vorzugsweise drei oder vier Flügel, die Abfallgut in Förderrichtung geordnet der Schneid- und Presseinheit zuführen und zugleich, mindestens bis zum Erfassen der Behälter durch die Schneidscheiben, selbiges in den Einzugsspalt der Schneid-und Presseinheit drücken. Oberhalb des Schneidwerkes und hinter dem Separator ist eine der Wände des Trichters weitergeführt bzw. ein plattenartiges Teil angeordnet, zur Begrenzung des Vorratsraumes und als Führungsfläche für die Rückführung von eventuell unter den Flügeln hindurch bzw. mitgeschleiften Behältnissen zum Vorratsraum hin.

Weitere vorteilhafte Konstruktionsdetails bei der neuen Vorrichtung sind die von außen aus in die Lagerplatten eingesetzten Lager für die Walzen. Dies Ist von Vorteil, da nicht ausgeschlossen ist, dass zugeführte Behälter verschlossen sind und zudem noch Flüssigkeit enthalten, die wiederum gären kann, sodass In der Flasche ein Druck aufgebaut ist und bei der ersten Perforation diese Flüssigkeit in der Schneid- und Presseinheit unkontrolliert herumspritzt.
Wegen letzterem sind Im Gehäuse der Vorrichtung Düsen vorgesehen, zur Beaufschlagung der Walzen und/oder der Einlass- und der Auslassöffnung mit Desinfektionsmittel.
Die äußeren Maße der Vorrichtung sind so, dass eine Ankoppelung an Flaschen- und/oder Dosenannahmeautomaten erfolgen kann.

Im folgenden Beschreibungsteil wird die Erfindung anhand von in Zeichnungen schematisch dargestellten vorteilhaften Ausführungsbeispielen näher erläutert. Es zeigen:
- **Figur 1**: eine erfindungsgemäße Vorrichtung in Seitenansicht mit teilweise geöffneter Seitenfläche und Blick auf die Schneid- und Presseinheit,
- **Figur 2**: eine schematische Sicht von der Seite auf die beiden Walzen, bei abgenommener vorderen (linken) Lagerplatte,
- **Figur 3**: die erste (vordere) Walze in Draufsicht, ohne Antriebsrad,
- **Figur 3a**: die Lage der beiden Walzen zueinander,
- **Figur 4a**: einen Blick auf die Antriebsseite einer der Walzen,
- **Figur 4b**: eine Stirnansicht zu Figur 4a,
- **Figur 4c**: eine Stirnansicht von Figur 4a ohne die Schneidscheibe,
- **Figur 5**: einen Ausschnitt einer Schneidscheibe mit einer weiteren Variante der Nutgestaltung,
- **Figur 6**: eine weitere Variante des den Walzen vorgeordneten Separators, der zugleich eine Andruckfunktion übernimmt und
- **Figur 7 und 7a**: weitere Varianten der Flügel der in Fig.1 gezeigten Dosier- und Andruckwelle.

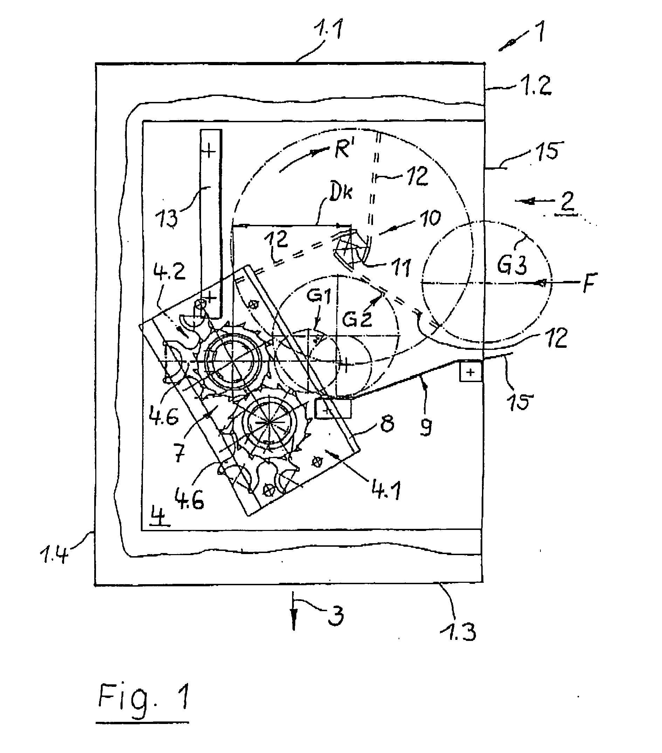

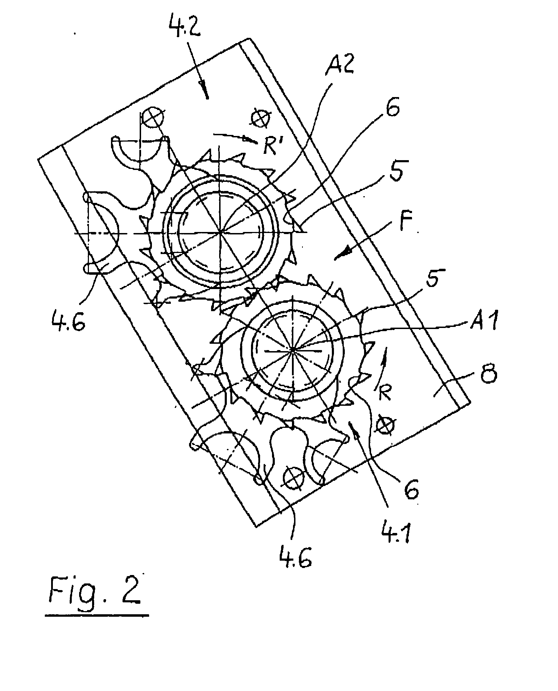

Die neue Vorrichtung zum Zusammendrücken leerer Behälter ist in **Fig. 1** in Seitenansicht mit teilweise geöffneter Seitenfläche und Blick auf die Schneid- und Presseinheit schematisch gezeigt. Die Vorrichtung umfasst ein Gehäuse **1,** mit einer Einfüllöffnung **2** in dessen vorderen Seite **1.2** sowie einer Ausgangsöffnung **3,** auch Auslassöffnung genannt, In dessen unteren Seite **1.3.** und eine im Gehäuse **1** angeordnete Schneid- und Presseinheit **4** sowie, hier nicht gezeigt, Mittel zum Antrieb und zur Steuerung der Schneid- und Presseinheit **4.** Die obere Seite **1.1** und die hintere Seite **1.4** des Gehäuses **1** sind hier im Ausführungsbeispiel geschlossen.
Die Schneid- und Presseinheit **4** enthält zwei bezüglich deren Drehachsen zueinander beabstandet angeordnete Walzen **4.1** und **4.2.** Jede Walze **4.1** und **4.2** weist, in Längsrichtung ihrer Drehachse **A1** bzw. **A2** gesehen, wenigstens zwei, bevorzugt mehrere Abschnitte **S1** und **S2** auf - siehe hierzu **Fig. 2** bis **3a**-, wobei nacheinander im Wechsel folgende Abschnitte jeweils einen anderen äußeren Durchmesser **D1; D2** besitzen, und, im montierten Zustand der beiden Walzen **4.1** und **4.2,** wenigstens die den größeren äußeren Durchmesser **D2** aufweisenden Abschnitte **S2** zueinander versetzt und mit ihren Umfangsflächen teilweise kämmend (überlappend) nebeneinander angeordnet sind und somit Schneidscheiben **5** bilden, deren Umfangsflächen **5.1** jeweils wenigstens eine Nut besitzt.
Von der Unterkante der Einfüllöffnung **2** aus ist zur Schneid- und Presseinheit **4** hin eine Rutsche **9** vorgesehen, auf der die eingegebenen Behälter **G3, G2** oder **G1** rollend oder rutschend zur Einheit **4** gelangen. Oberhalb dieser Rutsche **9** ist ein Separator **10** positioniert, der mit seinen um eine Drehachse **11** rotierenden Flügeln **12,** hier drei, die Behälter **G3, G2** oder **G1** in Förderrichtung F geordnet der Einheit 4 zuführt und zugleich, mindestens bis zum Erfassen der Behälter durch die Schneidscheiben **5,** selbige in den Einzugsspalt der Schneid- und Presseinheit **4** drückt. Mit Dk ist der von den Enden der Flügel **12** beschriebene Umfangskrels bezeichnet. Oberhalb der Schneid- und Presseinheit **4** und hinter dem Separator **10** ist ein plattenartiges Rahmenteil **13** zur Begrenzung des Aufnahmeraumes angeordnet. Der Bereich des Austritts der in der Schneid- und Presseinheit **4** aufbereiteten Gegenstände hat das Bezugszeichen **7.**

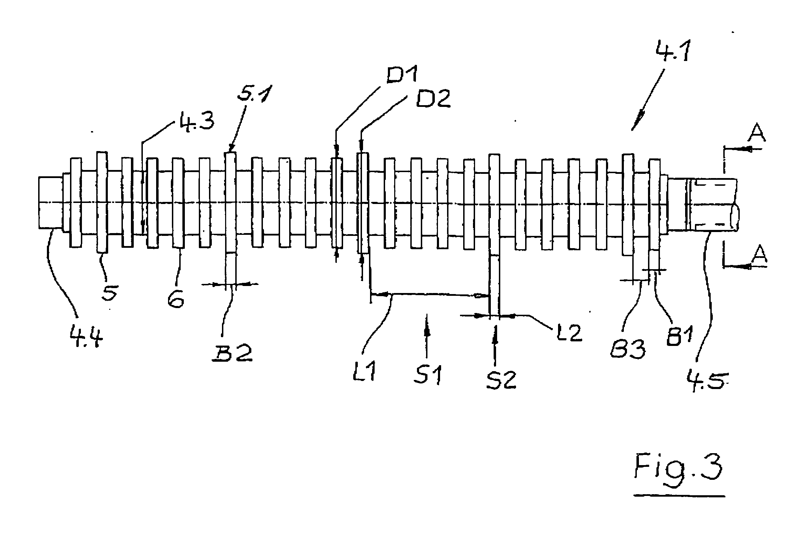

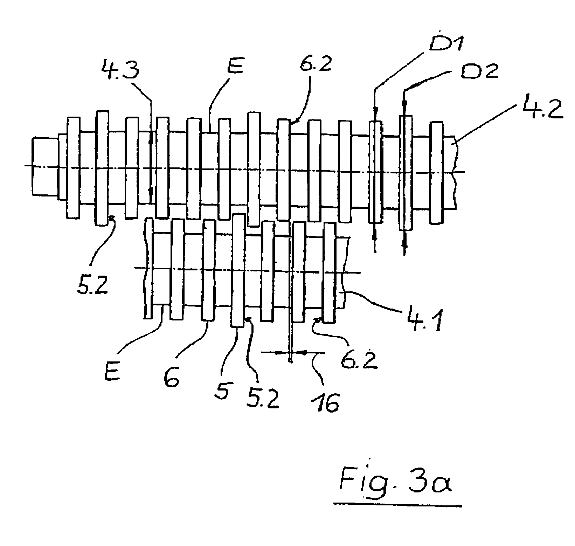

Die Länge **L2** der Abschnitte **S2** mit dem größeren äußeren Durchmesser **D2** ist geringer, als die Länge L1 der Abschnitte **S1,** die den kleineren äußeren Durchmesser **D1** besitzen.
Die den kleineren Durchmesser **D1** aufweisenden Abschnitte **S1** besitzen wenigstens zwei radial nach innen gerichtete, bis zu einem Kerndurchmesser **4.3** reichende Einstiche **E** derart, dass wenigstens eine Druckscheibe **6** gebildet ist.
Bevorzugt sind in den Abschnitten **S1,** die den kleineren Durchmesser **D1** aufweisen, mehrere Druckscheiben **6** vorgesehen, die jeweils mit der Breite **B3** des Einstiches **E** zueinander beabstandet sind. Das so genannte Schnittspiel **16** zwischen benachbarten Scheiben **6** oder **5** und **6,** also deren Seitenflächen **6.2** bzw. **6.2,** siehe **Fig. 3a****,** hat einen Wert zwischen 0,2 mm und 2 mm.
Mit **B1** ist die Breite der Druckscheiben **6,** mit **B2** die Breite der Schneidscheiben **5** bezeichnet.
Die Überlappung benachbarter und gegenüber liegender Scheiben ist in einem Wertebereich zwischen 0,5 mm und 2,5 mm gewählt, bevorzugt beträgt diese Überlappung 10 % der Breite einer Scheibe **6** bzw. **6.**
Die Scheiben der Walzen **4.1** und **4.2** sind gehärtet und besitzen max. eine Härte von 55 HRc.
Der in dieser Figur linke Endbereich der Walze **4.1** ist als Lagerzapfen **4.4** und der rechte Endbereich als Lager-und Antriebszapfen **4.5** geformt.

Bei der in **Fig. 1** und **2** gezeigten Ausführung sind die Lager der Walzen **4.1** und **4.2** von außen aus in die Lagerplatten 8 eingesetzt sowie vorzugsweise zudem nach innen, zum Arbeitsraum hin abgedichtet. Diese Konstruktion ist besonders verschleiß- und wartungsfreundlich.

Details der Abschnitte **S1** und **S2** sowie der Gestaltung der Walzen sind in den **Fig. 3** und **3a** gezeigt. Der Durchmesser **D2** der Abschnitte **S2** beträgt vorzugsweise 79 mm, der Durchmesser **D1** der kleineren Abschnitte **S1** 70 mm und der Kerndurchmesser **4.3** der Walzen **4.1** und **4.2** 50 mm.
Die Drehzahl der Walzen **4.1** und **4.2** der Schneid- und Presseinheit **4** beträgt vorzugsweise 60 U/min. Der Startimpuls für die Walzen **4.1** und **4.2** erfolgt vorzugsweise über eine Lichtschranke, die hier nicht dargestellt ist; zudem wird mit diesem Steuerteil auch eine Nachlaufzeit vorgegeben, so dass stets alle zugeführten Behälter die Schneid-und Presseinheit verlassen. Bei ruhenden Walzen befindet sich somit kein Behälter zwischen selbigen, Verklebungen durch Restinhalte der Behälter und unnötige Belastung der Schneidbereiche der Schneidscheiben werden vermieden.

In den **Fig.** 1 und **2** Ist noch gezeigt, dass bei dieser Ausführung zwischen den Scheiben **5** und **6** Abstreifer **4.6** angeordnet sind, wobei serienmäßige Abstreifer von Aktenvernichtern Anwendung finden.
Nicht dargestellt sind die im Gehäuse 1 angeordneten Düsen, zur Beaufschlagung der Walzen **4.1** und **4.2** und/oder der Einlass- **2** und der Auslassöffnung **3** mit Desinfektions- und/oder Reinigungsmittel, damit eine durch Flüssigkeitsreste und Umgebungsatmosphäre begünstigte Geruchsbildung (Bakterlenbildung) unterbunden werden kann.

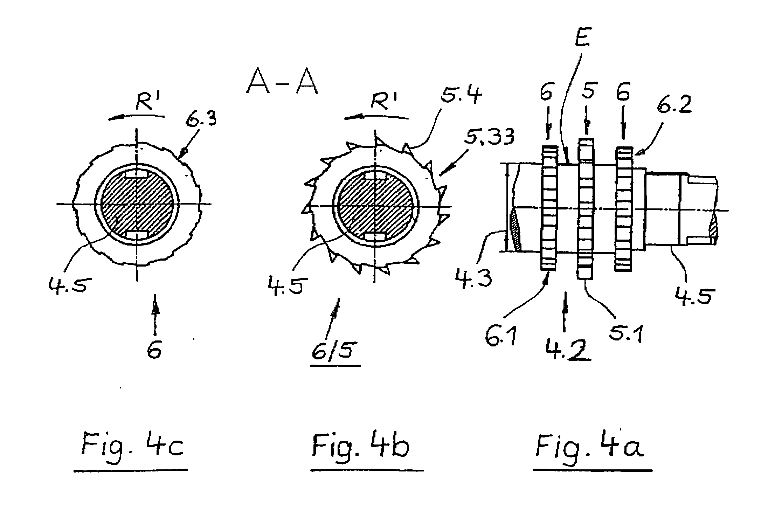

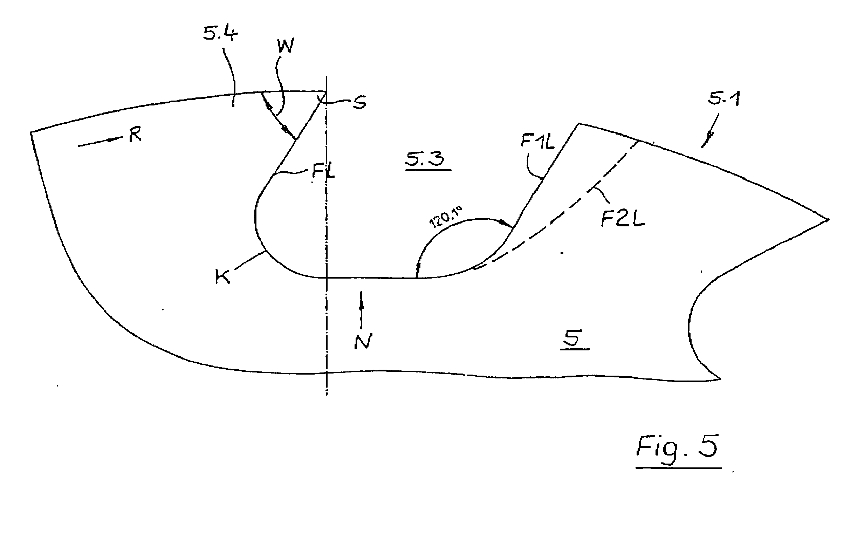

In den **Figuren 4a** bis **5** sind Ausführungsbeispiele für die Detailgestaltung der Schneidscheiben **5** und der Druckscheiben **6** sowie der in den Schneidscheilben **5** angeordneten Nuten gezeigt.
Nach **Fig. 5** bildet die in Umlaufrichtung **R, R'** nacheilende Flanke FL der in der Umfangsfläche **5.1** der Schneidscheiben **5** angeordneten Nuten **5.3** mit der Umfangsfläche **5.1** einen In Umlaufrichtung weisenden spitzwinkligen Haken **5.4,** wobei die an der Spitze **S** beginnende Nutflanke FL einen linearen sowie entgegen dem Walzendrehsinn **R, R'** gerichteten Verlauf und der daran anschließende Übergangsbereich **K** zum Nutfuß N und/oder der in Umlaufrichtung liegenden Nutflanke F1L oder F2Lhin, bogenförmig ausgebildet ist.
Bevorzugt verlaufen die beiden Nutflanken FL und F1L zueinander parallel oder divergierend FL, F2L. Der Spitzenwinkel **W** des Hakens **5.4** Ist vorzugsweise zwischen 45° und 80° gewählt.
In **Fig. 4a** ist der rechte Abschnitt der in **Fig. 3a** gezeigten zweiten, der hinteren Walze **4.2** dargestellt. Mit Pos. **4.6** ist der an diesem Endbereich vorgesehene Lager- und Antriebszapfen bezeichnet. Eine Schneidscheibe **5** ist beidseits von einer Druckscheibe **6** flankiert. In die jeweilige Umfangsflächen **6.1** bzw. **5.1** sind Nuten **6.3** bzw. **5.33** angeordnet, die deren Seitenflächen **6.2** bzw. **6.2** durchbrechen.
Eine Stirnansicht zu **Fig. 4a** ist In der Fig. **4b** gezeigt, mit Sicht auf die Seitenfläche **6.2** und die Haken **5.4** der dahinter angeordneten Schneidscheibe **6.** In der **Fig. 4c** ist eine Stirnansicht von **Fig. 4a** gezeigt, bei der die Schneidscheibe **5** in der Wiedergabe des betrachteten Bauteiles weggelassen wurde, um die Ausformung der Nuten **6.3** in der Druckscheibe **6** besser zeigen zu können. Wie schematisch dargestellt, ist die Tiefe der Nuten **6.3** im Verhältnis zur Tiefe der Nuten **5.3** wesentlich geringer.

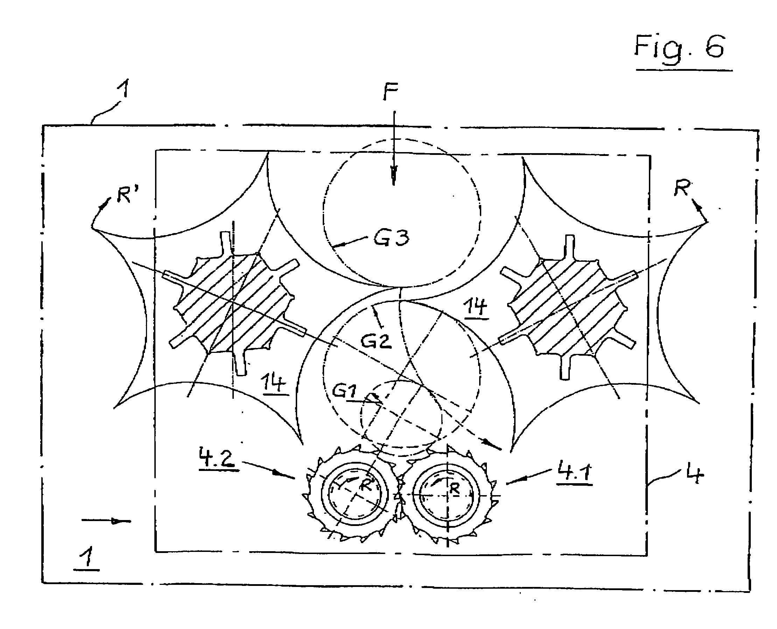

in der **Fig. 6** ist eine weitere Variante eines Separators gezeigt.
Dieser Separator **14** besitzt zwei, in Seiten-(Stirn-)ansicht gesehen, sternförmige Wellen, deren Drehsinn gleich den zugehörigen Walzen ist.

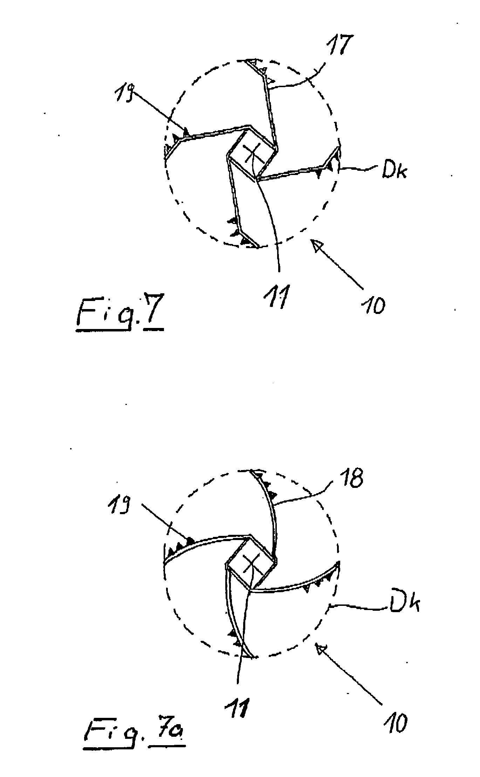

In der **Fig. 7 und 7a** sind weitere Varianten der Flügel des Separators **10** dargestellt. Ausgehend vom Zentrum, der Drehachse **11,** sind diese Flügel zu ihren freien Enden hin polygonzugartig **17** oder bogenförmig **18** geformt. Diese Ausführungen gewährleisten noch besser als die Grundvariante, dass die zugeführten Behälter, vor allem Behälter mit einem Volumen zwischen 0,25 Liter bis 3 Liter, einen optimalen Andruck in Richtung des Einzugspaltes der Schneid- und Presseinheit **4** erhalten. Wie aus diesen beiden Figuren noch ersichtlich ist, sind die Endbereiche der **Flügel 17** bzw. **18** mit Stechelementen **19** besetzt. Die Spitze dieser Stechelemente **19** zeigt in Drehrichtung, also in Arbeitsrichtung. Durch diese Maßnahme wird das Halten und Zuführen der Behälter zum Einzugspalt der Schneid- und Presseinheit **4** hin noch verbessert. Insbesondere bei sehr dünnwandigen und sehr flexiblen Behältern kann es unter Umständen dazu kommen, dass die Flügelenden über einen derartigen Behälter hinweg rutschen könnten, Diese Stechelemente **19** wirken einem solchen Bestreben entgegen.

Bei der Ausführung nach der **Fig. 1** sind an der vorderen Seite **1.2** im Bereich der Einfüllöffnung Anschlussstutzen **15** vorgesehen. Selbige werden dort angebracht, falls die Vorrichtung an einen Flaschen- und/oder Dosenannahmeautomaten angekoppelt werden soll.
Alle in der vorstehenden Beschreibung erwähnten sowie die nur allein aus der Zeichnung entnehmbaren Merkmale sind weitere Bestandteile der Erfindung, auch wenn die nicht besonders hervorgehoben und insbesondere nicht in den Ansprüchen erwähnt sind.
Die Erfindung ist nicht auf das beschriebene Ausführungsbeispiel beschränkt, sondern Im Rahmen der Offenbarung vielfach variabel.

### Bezugszeichenliste

- 1: Gehäuse
- 1.1: obere Seite (Fläche)
- 1.2: vordere Seite
- 1.3: untere Seite
- 1,4: hintere Seite
- 2: Einfüllöffnung
- 3: Auslassöffnung (Ausgangsöffnung)
- 4: Schneid- und Presseinheit
- 4.1: erste Walze (vordere)
- 4.2: zweite Walze (hintere)
- 4.3: Kerndurchmesser
- 4.4: Lagerzapfen
- 4.5: Lager- und Antriebszapfen
- 4.6: Abstreifer
- 5: Schneidscheiben
- 5.1: Umfangsflächen
- 5.2: Seitenflächen
- 5.3, 5.33: Nuten
- 5.4: Haken
- 6: Druckscheiben
- 6.1: Umfangsfläche
- 6.2: Seitenfläche
- 6.3: Nuten
- 7: Austritt
- 8: Lagerplatten
- 9: Rutsche
- 10: Separator
- 11: Drehachse von Pos. 10
- 12: Flügel
- 13: Rahmenteil (Begrenzung des Aufnahmeraumes nach hinten)
- 14: Separator (Selektierer)
- 15: Anschlussstutzen
- 16: Schnittspiel
- 17: Flügel, polygonzugartig 18 Flügel, bogenförmig
- 19: Stechelemente (Spitzschrauben, Nägel o. dgl. Teil)
- A1: Drehachse der Walze 4.9
- A2: Drehachse der Walze 4.2
- B1: Breite von Pos. 6
- B2: Breite von Pos, 5
- B3: Breite der Einstiche
- D1: Durchmesser der Abschnitte S1 (äußerer Durchmesser)
- D2: Durchmesser der Abschnitte S2 (äußerer Durchmesser)
- Dk: Umfangskreis der Flügel gem. Fig. 1
- E: Einstiche
- F: Förderrichtung
- FL: Flanke
- F1L: Flanke
- F2L: Flanke
- N: Nutfuß
- K: Übergangsbereich
- W: Spitzenwinkel
- G1, G2, G3: Behälter, mit verschiedenem Durchmesser
- S: Spitze von Pos.5. 4
- S1: Abschnitte
- S2: Abschnitte
- L1: Länge der Abschnitte S1
- L2: Länge der Abschnitte S2
- R: Rotationsrichtung (Drehrichtung)
- R': Rotationsrichtung (Drehrichtung)

## Patentansprüche

1. Vorrichtung zum Zusammendrücken leerer Behälter, insbesondere Getränkeflaschen oder -dosen aus Kunststoff, insbesondere aus PET, oder Weißblech, umfassend
• ein Gehäuse (1), mit einer Einfüllöffnung (2) sowie einer Ausgangsöffnung (3),
• eine im Gehäuse (1) angeordnete Einheit (4) zur Volumenreduzierung der zugeführten Behälter,
• Mittel zum Antrieb und zur Steuerung der Einheit (4), sowie
• einen nach der Einfüllöffnung (2) und vor der Einheit (4) angeordneten Separator/Selektierer (10),
***dadurch gekennzeichnet, dass***
der Separator/Selektierer (10) wenigstens einen Körper hat, der zwei oder mehrere im Wesentlichen radial gerichtet abragende Abschnitte besitzt, die rotierbar um dessen Drehachse angeordnet sind.

2. Vorrichtung nach Anspruch 1,
***dadurch gekennzeichnet, dass***
die abragenden Abschnitte derart rotierbar angeordnet sind,
dass jeder eingeführte Behälter geordnet der Einheit (4) zugeführt und zugleich, mindestens bis zum Erfassen des Behälters durch Elemente der Einheit (4), an bzw. in den Einzugsspalt der Einheit (4) gedrückt wird.

3. Vorrichtung nach Anspruch 1 oder 2,
***dadurch gekennzeichnet, dass***
der Separator/Selektierer (10) eine zwei oder mehrere Flügel besitzende Flügelwelle ist, deren freie Flügelenden in Drehrichtung (R') gesehen nacheilen.

4. Vorrichtung nach Anspruch 3,
***dadurch gekennzeichnet, dass***
die Flügelwelle drei oder vier Flügel (12) besitzt,

5. Vorrichtung nach Anspruch 3 oder 4,
***dadurch gekennzeichnet, dass***
die an der Flügelwelle befestigten Flügel zu ihren freien Enden hin polygonzugartig (17) oder bogenförmig (18) gestaltet sind.

6. Vorrichtung nach Anspruch 1 oder 2,
***dadurch gekennzeichnet, dass***
der Separator/Selektierer (10), in Seiten-(Stirn-) Ansicht gesehen, aus zwei Sternform-Wellen besteht.

7. Vorrichtung nach Anspruch 1, 2, 3, 4, 5 oder 6,
***dadurch gekennzeichnet, dass***
an den den zugeführten Behälter zeitweise kontaktierenden Flächenabschnitten des Separators/Selektierers (10) in Drehrichtung zeigende Stechelemente (21) angeordnet sind

8. Vorrichtung nach einem der Ansprüche 1 bis 7,
***dadurch gekennzeichnet, dass***
hinter dem Separator/Selektierer (10) und oberhalb der Einheit (4) eine Wand bzw. ein plattenartiges Teil angeordnet ist, zur Begrenzung eines Aufnahmeraumes und als Führungsfläche für die Rückführung eines eventuell unter den Abschnitten hindurch gerutschten bzw. mitgeschleiften Behälters zum Eingangsbereich hin.
